# EUROPEAN PATENT APPLICATION

(11) **EP 4 572 383 A1**
(43) Date of publication of application: **18.06.2025**
(21) Application number: 22954641.1
(22) Date of filing: 12.08.2022
(51) Int. Cl.: H04W 24/10

(54) **CSI REPORTING METHOD AND APPARATUS, DEVICE, AND SYSTEM**

(71) Applicant: Beijing Xiaomi Mobile Software Co., Ltd., Beijing 100085 (CN)
(72) Inventor: LIU, Min, Beijing 100085 (CN)
(74) Representative: Dehns Germany Partnerschaft mbB
(86) International application number: PCT/CN2022/112279
(87) International publication number: WO 2024/031689

(57) **Abstract**

A CSI reporting method and apparatus, a device, and a system, relating to the technical field of communications. The method comprises: a terminal device determines a quantization parameter corresponding to a CSI encoding model, the CSI encoding model being an AI/ML model used for encoding CSI, and the quantization parameter being used for quantizing the encoded CSI obtained by the CSI encoding model (210). For a scenario in which CSI is compressed by means of a CSI encoding model for reporting, by determining a quantization parameter corresponding to the CSI encoding model, a terminal device can use an accurate quantization parameter to quantize the encoded CSI obtained by the CSI encoding model; thus, the terminal device and a network device can have a consistent understanding about the quantization parameter, and the accuracy and reliability of CSI encoding and decoding can be improved.

## Description

### TECHNICAL FIELD

The present application relates to the technical field of communication, and in particular, to a method and apparatus for reporting CSI, devices and a system.

### BACKGROUND

Channel State Information (CSI) reporting means that the terminal device obtains CSI based on the measurement of the downlink reference signal (such as Channel State Information Reference Signal (CSI-RS)) sent by the network device, and reports the above CSI to the network device in accordance with the reporting manner and the uplink resource configured by the network device.

In the related art, Artificial Intelligence (AI)/Machine Learning (ML) models are introduced into the scenario of CSI reporting. For example, the terminal device obtains the CSI according to the measurement of the downlink reference signal, compresses and encodes the CSI through the CSI compression encoding model to obtain the compressed and encoded CSI, and then quantizes the compressed and encoded CSI into a binary bit stream and sends it to the network device; the network device performs dequantization on the received binary bit stream, and then inputs the information obtained by the dequantization to the CSI decoding model for decoding to obtain the decoded CSI. The above-mentioned CSI compression encoding and CSI decoding models may be AI/ML models.

At present, further research is needed on the CSI reporting scenario where the AI/ML model is introduced.

### SUMMARY

Embodiments of the present application provide a method and apparatus for reporting CSI, devices and a system. The technical solutions are as follows.

According to an aspect of the embodiments of the present application, a method for reporting CSI is provided. The method is performed by a terminal device. The method includes:
determining a quantization parameter corresponding to a CSI encoding model, where the CSI encoding model is an AI/ML model used to encode CSI, and the quantization parameter is used to quantize the encoded CSI obtained by the CSI encoding model.

According to an aspect of the embodiments of the present application, a method for reporting CSI is provided. The method is performed by a network device. The method includes:
sending indication information to a terminal device, where the indication information is used to indicate a quantization parameter corresponding to a CSI encoding model, the CSI encoding model is an AI/ML model used to encode CSI, and the quantization parameter is used to quantize the encoded CSI obtained by the CSI encoding model.

According to an aspect of the embodiments of the present application, an apparatus for reporting CSI is provided, and the apparatus includes:
a processing module, configured to determine a quantization parameter corresponding to a CSI encoding model, the CSI encoding model is an AI/ML model used to encode CSI, and the quantization parameter is used to quantize the encoded CSI obtained by the CSI encoding model.

According to an aspect of the embodiments of the present application, an apparatus for reporting CSI is provided, and the apparatus includes:
a sending module, configured to send indication information to a terminal device, where the indication information is used to indicate a quantization parameter corresponding to a CSI encoding model, the CSI encoding model is an AI/ML model used to encode CSI, and the quantization parameter is used to quantize the encoded CSI obtained by the CSI encoding model.

According to an aspect of the embodiments of the present application, a terminal device is provided. The terminal device includes a processor and a memory. A computer program is stored in the memory. The processor executes the computer program to implement the above-mentioned method for reporting CSI on the terminal device side.

According to an aspect of the embodiments of the present application, a network device is provided. The network device includes a processor and a memory. A computer program is stored in the memory. The processor executes the computer program to implement the above-mentioned method for reporting CSI on the network device side.

According to an aspect of the embodiments of the present application, a computer-readable storage medium is provided, a computer program is stored in the storage medium, and the computer program is configured to be performed by a processor to implement the above-mentioned method for reporting CSI on the terminal device side, or implement the above-mentioned method for reporting CSI on the network device side.

According to an aspect of an embodiment of the present application, a communication system is provided. The communication system includes a terminal device and a network device. The terminal device is configured to implement the above-mentioned method for reporting CSI on the terminal device side. The network device is configured to implement the above-mentioned method for reporting CSI on the network device side.

According to an aspect of the embodiments of the present application, a chip is provided. The chip includes a programmable logic circuit and/or program instructions. When the chip is running, it is configured to implement the above-mentioned method for reporting CSI on the terminal device side, or to implement the above-mentioned method for reporting CSI on the network device side.

According to an aspect of the embodiments of the present application, a computer program product is provided. The computer program product includes computer instructions. The computer instructions are stored in a computer-readable storage medium. A processor reads the computer instructions from the computer-readable storage medium and executes the computer instructions to implement the above-mentioned method for reporting CSI on the terminal device side, or to implement the above-mentioned method for reporting CSI on the network device side.

The technical solutions provided by the embodiments of the present application may include the following beneficial effects.

For scenarios where the CSI encoding model is used to compress and report CSI, by determining the quantization parameter corresponding to the CSI encoding model, the terminal device can quantify the encoded CSI obtained by the CSI encoding model using the accurate quantization parameter, which is helpful to the common understanding of the quantification parameter between the terminal device and the network device, thereby improving the accuracy and reliability of CSI encoding and decoding.

### BRIEF DESCRIPTION OF THE DRAWINGS

The accompanying drawings, which are incorporated in and constitute a part of this specification, illustrate the embodiments consistent with the present application, and together with the specification, serve to explain the principles of the present application.
FIG. 1 is a schematic diagram of a network architecture provided by an exemplary embodiment of the present application;
FIG. 2 is a flowchart of a method for reporting CSI provided by an exemplary embodiment of the present application;
FIG. 3 is a schematic diagram of a CSI compression and decompression architecture of a bilateral AI/ML model provided by an embodiment of the present application;
FIG. 4 is a schematic diagram of the CSI compression and decompression architecture of the bilateral AI/ML model provided by another embodiment of the present application;
FIG. 5 is a flowchart of a method for reporting CSI provided by another exemplary embodiment of the present application;
FIG. 6 is a block diagram of an apparatus for reporting CSI provided by an exemplary embodiment of the present application;
FIG. 7 is a block diagram of an apparatus for reporting CSI provided by another exemplary embodiment of the present application;
FIG. 8 is a block diagram of a communication device provided by an exemplary embodiment of the present application.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with the present application. Rather, they are merely examples of the apparatus and methods consistent with some aspects of the present application as detailed in the appended claims.

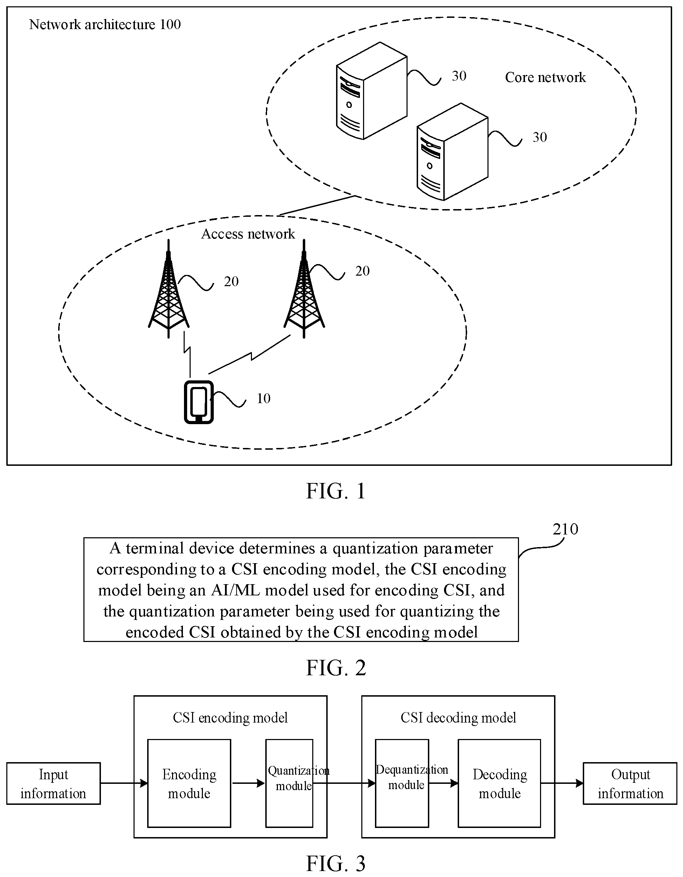

FIG. 1 is a schematic diagram of a network architecture 100 provided by an exemplary embodiment of the present application. The network architecture 100 may include: a terminal device 10, an access network device 20 and a core network device 30.

The terminal device 10 may refer to a User Equipment (UE), an access terminal, a user unit, a user station, a mobile station, a mobile, a remote station, a remote terminal, a mobile device, a wireless communication device, a user agent or a user apparatus. Optionally, the terminal device 10 may also be a cellular phone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modem, a vehicle-mounted device, a wearable device, a terminal device in the fifth-generation mobile communication system (5th Generation System, 5GS) or a terminal device in the future evolved Public Land Mobile Network (PLMN), etc., which is not limited in the embodiments of the present application. For convenience of description, the devices mentioned above are collectively referred to as terminal devices. The number of the terminal devices 10 is usually multiple, and one or more terminal devices 10 may be distributed in the cell managed by each access network device 20. In the embodiments of the present application, "terminal device" and "UE" are often used interchangeably, but those skilled in the art can understand that the two usually express the same meaning.

The access network device 20 is a device deployed in the access network to provide a wireless communication function for the terminal device 10. The access network device 20 may include various forms of macro base stations, micro base stations, relay stations, access points, etc. In systems using different wireless access technologies, the names of devices with the access network device functions may be different. For example, in 5G NR systems, they are called gNodeB or gNB. As communication technology evolves, the name "access network device" may change. For convenience of description, in the embodiments of the present application, the above-mentioned apparatuses that provide the wireless communication functions for the terminal device 10 are collectively referred to as access network devices. Optionally, through the access network device 20, a communication relationship may be established between the terminal device 10 and the core network device 30. For example, in a Long Term Evolution (LTE) system, the access network device 20 may be an Evolved Universal Terrestrial Radio Access Network (EUTRAN) or one or more eNodeBs in the EUTRAN. In the 5G NR system, the access network device 20 may be a Radio Access Network (RAN) or one or more gNBs in the RAN. In the embodiments of the present application, the "network device" refers to the access network device 20, such as a base station, unless otherwise specified.

The core network device 30 is a device deployed in the core network. The functions of the core network device 30 mainly include providing a user connection, managing the users, and carrying the services, and serves as a bearer network to provide an interface to an external network. For example, the core network device in the 5G NR system can include an Access and Mobility Management Function (AMF) entity, a User Plane Function (UPF) entity and a Session Management Function (SMF) entity, and other devices.

In some embodiments, the access network device 20 and the core network device 30 communicate with each other through some air interface technology, such as the NG interface in the 5G NR system. The access network device 20 and the terminal device 10 communicate with each other through some air interface technology, such as the Uu interface.

The "5G NR system" in the embodiments of the present application may also be called a 5G system or an NR system, but those skilled in the art can understand its meaning. The technical solutions described in the embodiments of the present application may be applied to the LTE system, the 5G NR system, the subsequent evolution system of the 5G NR system, and may also be applied to other communication systems such as the Narrow Band Internet of Things (NB-IoT) system, which is not limited by the present application.

In the embodiments of the present application, the network device can provide services for a cell, and the terminal device communicates with the network device through the transmission resource (for example, the frequency domain resource, or spectrum resource) on the carrier used by the cell. The cell may be a cell corresponding to the network device (such as the base station). The cell may belong to the macro base station or the base station corresponding to the Small cell. The Small cell here may include: a Metro cell, a Micro cell, a Pico cell, a Femto cell, etc. These Small cells have the characteristics of small coverage and low transmission power, and are suitable for providing high-rate data transmission services.

FIG. 2 is a flowchart of a method for reporting CSI provided by an exemplary embodiment of the present application. The method may include the following steps 210.

In step 210, the terminal device determines a quantization parameter corresponding to a CSI encoding model. The CSI encoding model is an AI/ML model used to encode CSI, and the quantization parameter is used to quantize the encoded CSI obtained by the CSI encoding model.

The quantization parameter refers to the number of bits required to represent a piece of data, that is, how many bits are needed to represent a piece of data. For example, if the quantization parameter is 2, then one piece of data is represented by 2 bits; if the quantization parameter is 3, then one piece of data is represented by 3 bits. The above data may be in any form such as a floating point number, an integer, or a complex number. Through the quantization parameter, the above data is converted into a binary bit stream composed of 0 and/or 1, thereby reducing the amount of data required to represent a piece of data. For example, there is the following set of data: 0.9, 0.1, 0.8 and 0.4. Assuming that the quantization parameter is 2, then each piece of data is represented by 2 bits. For example, when the data value range is [0,0.25), the data may be quantified as 00; when the data value range is [0.25,0.5), the data may be quantified as 01; when the data value the range is [0.5, 0.75), the data may be quantified as 10; when the data value range is [0.75, 1], the data may be quantified as 11. Then, for the above 0.9 and 0.8, both may be expressed quantitatively by 11; for the above 0.1, it may be expressed quantitatively by 00; for the above 0.4, it may be expressed quantitatively by 01. The quantized binary bit streams of the above 0.9, 0.1, 0.8 and 0.4 are 11, 00, 11 and 01.

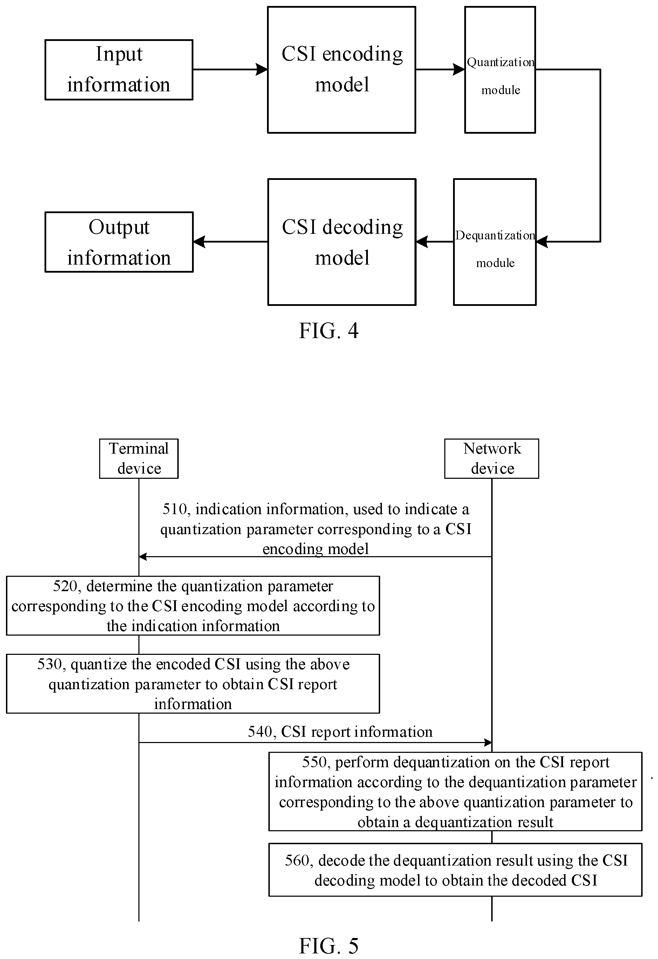

For example, for the CSI compression and decompression architecture of the bilateral AI/ML model based on the encoder (i.e., the CSI encoding model) and the decoder (i.e., the CSI decoding model), the CSI encoding model is deployed in the terminal device, and the CSI decoding model is deployed in the network device. The CSI encoding model and the CSI decoding model may include two structures as shown in FIG. 3 and FIG. 4 below.

As shown in FIG. 3, the quantization module is inside the CSI encoding model. The terminal device measures the reference signal (such as CSI-RS) sent by the network device to obtain the CSI, and determines the input information of the CSI encoding model according to the measured CSI. The CSI encoding model includes an encoding module and a quantization module. First, the encoding module encodes the above input information to obtain the encoded CSI. Then, the quantization module quantizes the encoded CSI to obtain the CSI report information. The quantization module may use the quantization parameter determined above when quantizing the encoded CSI. The CSI report information is a bit stream in binary form. The terminal device sends the CSI report information to the network device. Correspondingly, the network device receives the above CSI report information. Similarly, the CSI decoding model may include a dequantization module and a decoding module. The network device first dequantizes the CSI report information through the dequantization module to obtain the dequantization result, and then uses the decoding module to decode the dequantization result to obtain the decoded CSI. The above-mentioned encoding module and decoding module may be AI/ML models built based on the neural network. The present application does not limit the specific structure of the neural network.

As shown in FIG. 4, the quantization module is external to the CSI encoding model. The terminal device measures the reference signal (such as CSI-RS) sent by the network device to obtain the CSI, and determines the input information of the CSI encoding model according to the measured CSI. First, the CSI encoding model encodes the above input information to obtain the encoded CSI, and then the quantization module quantizes the encoded CSI to obtain the CSI report information. The quantization module may use the quantization parameter determined above when quantizing the encoded CSI. The CSI report information is a bit stream in binary form. The terminal device sends the CSI report information to the network device. Correspondingly, the network device receives the above CSI report information. Similarly, the dequantization module is external to the CSI decoding model. The network device first dequantizes the CSI report information through the dequantization module to obtain the dequantization result, and then uses the CSI decoding model to decode the dequantization result to obtain the decoded CSI. The above-mentioned CSI encoding model and CSI decoding model may be AI/ML models built based on the neural network. The present application does not limit the specific structure of the neural network.

In some other embodiments, the quantization module deployed in the terminal device may be inside the CSI encoding model, and the dequantization module deployed in the network device may be outside the CSI decoding model; or, the quantization module deployed in the terminal device may be outside the CSI decoding model, and the dequantization module deployed in the network device is inside the CSI decoding model, which is not limited in the present application.

In some embodiments, the quantization parameter is included in the parameter information of the CSI encoding model. The parameter information of the CSI encoding model is used to define the structure and/or parameter of the CSI encoding model. For example, the parameter information of the CSI encoding model is used to define the structure and/or parameter of the neural network corresponding to the CSI encoding model, such as which functional layers the neural network includes, the connection relationships between respective functional layers, and the weight parameter of each functional layer, etc. The parameter information of the CSI encoding model may include the quantization parameter corresponding to the CSI encoding model. In this way, the quantization parameter and the CSI encoding model may be delivered together. For example, when the model provider sends the CSI encoding model to the terminal device, it may send the parameter information of the CSI encoding model to the terminal device, and the terminal device may construct a CSI encoding model according to the above parameter information, and determine the quantization parameter corresponding to the CSI encoding model according to the quantization parameter contained in the above parameter information. For example, the above model provider may be an access network device, a core network device, or an application server, which is not limited in the present application. The core network device may be an existing core network element in the current core network architecture, such as AMF; it may also be a newly added core network element based on the current core network architecture, which is not limited by the present application. The application server may be a server used to manage and/or provide the above-mentioned CSI encoding model, and the application server may be a server in the operator's network or a third-party server outside the operator's network, which is not limited by the present application.

In some embodiments, the quantization parameter is determined based on indication information sent by the network device. For example, the network device may be an access network device (such as a base station). The access network device sends indication information to the terminal device, and the terminal device determines the quantization parameter according to the indication information. Optionally, the indication information is sent in the form of control signaling.

For example, the indication information is used to indicate one candidate value among a plurality of candidate values as the quantization parameter. Optionally, the above plurality of candidate values may be specified by a standard, or preconfigured, or configured in advance by the network device. For example, the plurality of candidate values include 2 and 4, and the indication information is used to indicate one of the plurality of candidate values as the quantization parameter, such as indicating 2 as the quantization parameter. Optionally, the indication information may be represented by at least one bit. For example, the indication information may be used to indicate the index, identifier (ID) or sequence number of the candidate value. For example, the plurality of candidate values include 2 and 4. The indication information is 0, indicating that 2 is indicated as the quantization parameter, and the indication information is 1, indicating that 4 is indicated as the quantization parameter.

For example, the indication information is included in the CSI report configuration information (CSI report config) sent by the network device. The CSI report configuration information may include the above indication information, which is used to indicate the quantization parameter corresponding to the CSI encoding model. For example, the CSI report configuration information is used to configure CSI reporting, for example, it includes the above indication information, and it may also include information for indicating at least one of the CSI report configurations such as the CSI reporting resource (such as the time-frequency resource used for CSI reporting), a time domain characteristic of CSI reporting (such as a periodic reporting, a semi-static reporting or an aperiodic reporting, etc.), a reporting amount. For example, when the terminal device is in the connected state, the network device sends the CSI report configuration information to the terminal device. For example, the CSI report configuration information is sent through Radio Resource Control (RRC) signaling.

For example, in the case that the CSI report configuration information indicates that the CSI encoding model is used, the CSI report configuration information includes the above indication information. In the case that the CSI report configuration information indicates that the CSI encoding model is not used, the CSI report configuration information does not include the above indication information. That is, the above indication information is optional, and this parameter is only valid when the CSI encoding model is used.

For example, the indication information includes first information and second information; where the first information is used to configure a plurality of quantization parameters, and the second information is used to activate or indicate one quantization parameter among the plurality of quantization parameters. For example, the plurality of quantization parameters configured in the first information include 2, 3 and 4, and the second information activates or indicates one of the quantization parameters (such as 4) as the quantization parameter corresponding to the CSI encoding model.

For example, the first information is RRC signaling, and the second information is Medium Access Control Control Element (MAC CE) signaling. For example, the network device sends RRC signaling to the terminal device. The RRC signaling is used to configure a plurality of quantization parameters. The network device sends MAC CE signaling to the terminal device. The MAC CE signaling is used to activate one of the above plurality of quantization parameters as the quantization parameter corresponding to the CSI encoding model.

For example, the first information is RRC signaling, and the second information is Downlink Control Information (DCI). For example, the network device sends RRC signaling to the terminal device. The RRC signaling is used to configure a plurality of quantization parameters. The network device sends DCI to the terminal device. The DCI is used to indicate one of the plurality of quantization parameters as the quantization parameter corresponding to the CSI encoding model.

For example, the first information is RRC signaling, and the second information is MAC CE and DCI. For example, the network device sends RRC signaling to the terminal device. The RRC signaling is used to configure a plurality of quantization parameters. The network device sends MAC CE signaling to the terminal device. The MAC CE signaling is used to activate at least one of the above plurality of quantization parameters. The network device sends DCI to the terminal device, where the DCI is used to indicate one of the at least one activated quantization parameter as the quantization parameter corresponding to the CSI encoding model.

In some embodiments, after the terminal device determines the quantization parameter corresponding to the CSI encoding model, the method further includes: the terminal device quantizing the encoded CSI using the quantization parameter to obtain CSI report information, and sending the CSI report information to the network device. For example, the terminal device measures the reference signal (such as CSI-RS) sent by the network device to obtain the CSI, and determines the input information of the CSI encoding model according to the measured CSI. First, the CSI encoding model (or the encoding module in the CSI encoding model) encodes the above input information to obtain the encoded CSI, and then the quantization module uses the above quantization parameter to quantize the encoded CSI to obtain the CSI report information. The terminal device reports the CSI report information to the network device.

In the technical solutions provided by the embodiments of the present application, in the scenario where the CSI encoding model is used to compress and report the CSI, by determining the quantization parameter corresponding to the CSI encoding model, the terminal device can use the accurate quantization parameter to quantify the encoded CSI obtained by the CSI encoding model, which is helpful to the common understanding of the quantification parameter between the terminal device and the network device, thereby improving the accuracy and reliability of CSI encoding and decoding.

In addition, the embodiments of the present application provide a plurality of ways of indicating the quantization parameter. One candidate value among the plurality of candidate values is indicated as the quantization parameter, this method is simple to implement and helps to save signaling overhead. A plurality of quantization parameters are configured by the first information, and one quantization parameter among the plurality of quantization parameters is activated or indicated through the second information, this method is more flexible, and the network device can flexibly adjust the used quantization parameter.

FIG. 5 is a flowchart of a method for reporting CSI provided by another exemplary embodiment of the present application. The method may include at least one of the following steps 510 to 560.

In step 510, the network device sends indication information to the terminal device, where the indication information is used to indicate a quantization parameter corresponding to a CSI encoding model.

The CSI encoding model is an AI/ML model used to encode CSI, and the quantization parameter is used to quantize the encoded CSI obtained by the CSI encoding model. The quantization module used to quantize the encoded CSI may be inside the CSI encoding model (as shown in FIG. 3) or outside the CSI encoding model (as shown in FIG. 4), which is not limited by the present application.

In some embodiments, the network device sends control signaling to the terminal device, and the control signaling includes the above indication information for indicating the quantization parameter corresponding to the CSI encoding model. For example, the control signaling may be RRC signaling, MAC CE signaling, DCI or other forms, which is not limited in the present application.

In some embodiments, the indication information is used to indicate one candidate value among the plurality of candidate values as the quantization parameter.

In some embodiments, the indication information is included in the CSI report configuration information (CSI report config) sent by the network device, and the CSI report configuration information may be sent through RRC signaling.

In some embodiments, the indication information includes first information and second information. The network device sends the first information to the terminal device, where the first information is used to configure a plurality of quantization parameters. The network device sends the second information to the terminal device, where the second information is used to activate or indicate one quantization parameter among the plurality of quantization parameters. The first information may be sent after the terminal device accesses the network device, and the second information may be sent when the terminal device needs to use the CSI encoding model for CSI encoding.

For unspecified details of the above indication information, the above embodiments may be referred to.

In step 520, the terminal device determines the quantization parameter corresponding to the CSI encoding model according to the indication information.

For example, if the indication information is used to indicate one candidate value among a plurality of candidate values as the quantization parameter, the terminal device determines the candidate value indicated by the indication information as the quantization parameter corresponding to the CSI encoding model.

For example, if the indication information includes the first information and the second information, the terminal device determines one quantization parameter activated or indicated by the second information as the quantization parameter corresponding to the CSI encoding model.

In step 530, the terminal device quantizes the encoded CSI using the above quantization parameter to obtain CSI report information.

For example, the terminal device measures the reference signal (such as CSI-RS) sent by the network device to obtain the CSI, and determines the input information of the CSI encoding model according to the measured CSI. First, the CSI encoding model (or the encoding module in the CSI encoding model) encodes the above input information to obtain the encoded CSI, and then the quantization module uses the quantization parameter determined above to quantize the encoded CSI to obtain the CSI report information.

In step 540, the terminal device sends CSI report information to the network device.

In step 550, the network device performs dequantization on the CSI report information according to the dequantization parameter corresponding to the above quantization parameter to obtain a dequantization result.

In step 560, the network device decodes the dequantization result using the CSI decoding model to obtain the decoded CSI.

The CSI decoding model is an AI/ML model used to decode the CSI report information. The dequantization is the reverse process of quantization. Since the quantization parameter is indicated by the network device to the terminal device, the network device knows the quantization parameter used by the terminal device, and accordingly can use the dequantization parameter corresponding to the quantization parameter to perform dequantization processing on the CSI report information in binary form, to decode and obtain the dequantization result in the form of floating point number, integer or complex number.

For example, the network device first dequantizes the CSI report information through the dequantization module according to the above dequantization parameter to obtain the dequantization result, and then uses the CSI decoding model (or the decoding module in the CSI decoding model) to decode the dequantization result, to obtain the decoded CSI.

The technical solutions provided by the embodiments are aimed at the CSI compression and decompression architecture of the bilateral AI/ML model based on the CSI encoding model and the CSI decoding model, enabling the terminal device and the network device to have a common understanding of the quantization parameter, thereby improving the accuracy and reliability of CSI encoding and decoding.

It should be noted that the above steps related to the execution of the terminal device can be independently implemented as a communication method on the terminal device side; the above steps related to the execution of the network device can be independently implemented as a communication method on the network device side.

The following are apparatus embodiments of the present application, which can be used to execute the method embodiments of the present application. For details not disclosed in the apparatus embodiments of the present application, the method embodiments of the present application may be referred to.

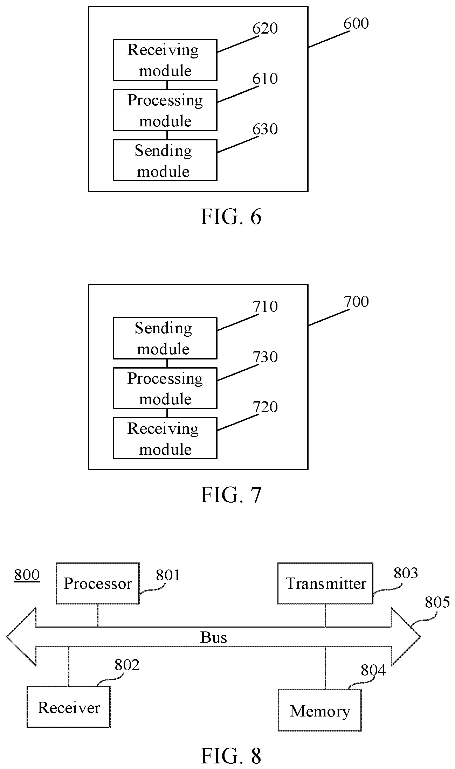

FIG. 6 is a block diagram of an apparatus for reporting CSI provided by an exemplary embodiment of the present application. The apparatus has the function of implementing the above method examples on the terminal device side, and the function can be implemented by hardware, or can also be implemented by hardware executing corresponding software. The apparatus may be the terminal device introduced above, or may be set in the terminal device. As shown in FIG. 6, the apparatus 600 may include: a processing module 610.

The processing module 610 is configured to determine a quantization parameter corresponding to the CSI encoding model. The CSI encoding model is an AI/ML model used to encode CSI. The quantization parameter is used to quantify the encoded CSI obtained by the CSI encoding model.

In some embodiments, the quantization parameter is included in parameter information of the CSI encoding model.

In some embodiments, the quantization parameter is determined based on indication information sent by the network device.

In some embodiments, the indication information is used to indicate one candidate value among a plurality of candidate values as the quantization parameter.

In some embodiments, the indication information is included in CSI report configuration information sent by the network device.

In some embodiments, in the case that the CSI report configuration information indicates using the CSI encoding model, the CSI report configuration information includes the indication information.

In some embodiments, the indication information includes first information and second information; where the first information is used to configure a plurality of quantization parameters, and the second information is used to activate or indicate one quantization parameter in the plurality of quantization parameters.

In some embodiments, the first information is RRC signaling, and the second information is MAC CE signaling.

In some embodiments, as shown in FIG. 6, the apparatus 600 further includes: a receiving module 620, configured to receive the indication information sent by the network device.

In some embodiments, as shown in FIG. 6, the apparatus 600 further includes: a sending module 630.

The processing module 610 is further configured to quantize the encoded CSI using the quantization parameter to obtain CSI report information.

The sending module 630 is configured to send the CSI report information to the network device.

FIG. 7 is a block diagram of an apparatus for reporting CSI provided by another exemplary embodiment of the present application. The apparatus has the function of implementing the above method examples on the network device side. The function can be implemented by hardware, or can also be implemented by hardware executing corresponding software. The apparatus may be the network device introduced above, or may be set in the network device. As shown in FIG. 7, the apparatus 700 may include: a sending module 710.

The sending module 710 is configured to send indication information to the terminal device. The indication information is used to indicate a quantization parameter corresponding to the CSI encoding model. The CSI encoding model is an AI/ML model used to encode CSI. The quantization parameter is used to quantize the encoded CSI obtained by the CSI encoding model.

In some embodiments, the indication information is used to indicate one candidate value among a plurality of candidate values as the quantization parameter.

In some embodiments, the indication information is included in the CSI report configuration information sent by the network device.

In some embodiments, in the case that the CSI report configuration information indicates using the CSI encoding model, the CSI report configuration information includes the indication information.

In some embodiments, the indication information includes first information and second information; where the first information is used to configure a plurality of quantization parameters, and the second information is used to activate or indicate one quantization parameter in the plurality of quantization parameters.

In some embodiments, the first information is RRC signaling, and the second information is MAC CE signaling.

In some embodiments, as shown in FIG. 7, the apparatus 700 further includes: a receiving module 720 and a processing module 730.

The receiving module 720 is configured to receive CSI report information sent by the terminal device, where the CSI report information is obtained by quantizing the encoded CSI using the quantization parameter.

The processing module 730 is configured to dequantize the CSI report information according to the dequantization parameter corresponding to the quantization parameter to obtain a dequantization result; decode the dequantization result using the CSI decoding model to obtain the decoded CSI; where the CSI decoding model is an AI/ML model used to decode the CSI report information.

It should be noted that when the apparatuses provided in the above embodiments implement their functions, the division of the above functional modules is only used as an example. In practical applications, the above functions can be distributed to be completed by different functional modules according to actual needs, that is, the content structure of the device is divided into different functional modules to complete all or part of the functions described above.

Regarding the apparatuses in the above embodiments, the specific manner in which each module performs operations has been described in detail in the embodiments related to the method, and will not be described in detail here. For details not described in detail in the apparatus embodiments, the above method embodiments may be referred to.

FIG. 8 is a block diagram of a communication device 800 according to an exemplary embodiment. The communication device 800 may be the aforementioned terminal device or network device. The communication device 800 may include: a processor 801, a receiver 802, and a transmitter 803, a memory 804 and a bus 805. The processor 801 may be used to implement the function of the processing module in the above apparatus embodiments, the receiver 802 may be used to implement the function of the receiving module in the above apparatus embodiments, and the transmitter 803 may be used to implement the function of the sending module in the above apparatus embodiments.

The processor 801 includes one or more processing cores. The processor 801 executes various functional applications and information processing by running software programs and modules.

The receiver 802 and the transmitter 803 may be implemented as one communication component, and the communication component may be a communication chip.

The memory 804 is connected to the processor 801 through the bus 805.

The memory 804 may be used to store a computer program, and the processor 801 is used to execute the computer program to implement the above-mentioned method for reporting CSI on the terminal device side or the method for reporting CSI on the network device side.

Additionally, the memory 804 may be implemented by any type of volatile or non-volatile storage device, or combination thereof, including but not limited to: a magnetic or optical disc, an Electrically Erasable Programmable Read Only Memory (EEPROM), an Erasable Programmable Read Only Memory (EPROM), a Static Random-Access Memory (SRAM), a Read-Only Memory (ROM), a magnetic memory, a flash memory, a Programmable Read-only Memory (PROM).

Embodiments of the present application further provide a computer-readable storage medium. A computer program is stored in the storage medium. The computer program is used to be performed by a processor to implement the above method for reporting CSI on the terminal device side, or the method for reporting CSI on the network device side. Optionally, the computer-readable storage medium may include: a Read-Only Memory (ROM), a Random-Access Memory (RAM), Solid State Drives (SSD) or an optical disc, etc. The random access memory may include a Resistance Random Access Memory (ReRAM) and a Dynamic Random Access Memory (DRAM).

Embodiments of the present application also provide a communication system. The communication system includes a terminal device and a network device. The terminal device is used to implement the above method for reporting CSI on the terminal device side. The network device is used to implement the above method for reporting CSI on the network device side.

Embodiments of the present application also provide a chip. The chip includes a programmable logic circuit and/or program instruction. When the chip is running, it is configured to implement the above-mentioned method for reporting CSI on the terminal device side, or the method for reporting CSI on the network device side.

Embodiments of the present application also provide a computer program product. The computer program product includes computer instructions. The computer instructions are stored in a computer-readable storage medium. The processor reads and executes the computer instructions from the computer-readable storage medium to implement the method for reporting CSI on the terminal device side or the method for reporting CSI on the network device side.

It should be understood that the "indication" mentioned in the embodiments of the present application may be a direct indication, an indirect indication, or an association relationship. For example, A indicates B, which may mean that A directly indicates B, for example, B may be obtained through A; it may also mean that A indirectly indicates B, for example, A indicates C, and B may be obtained through C; it may also mean that there is an association relationship between A and B.

In the description of the embodiments of the present application, the term "corresponding" may mean that there is a direct corresponding or indirect corresponding relationship between the two, it may also mean that there is an association relationship between the two, or it may mean indicating and being indicated, configuring and being configured, and other relationships.

In some embodiments of the present application, "predefined" may be realized by pre-saving corresponding codes, tables or other methods that can be used to indicate relevant information in the devices (for example, including the terminal device and the network device). The specific implementation method is not limited in the present application. For example, predefined can refer to what is defined in the protocol.

In some embodiments of the present application, the "protocol" may refer to a standard protocol in the communication field, which may include, for example, LTE protocol, NR protocol, and related protocols applied in future communication systems, which is not limited by the present application.

The "plurality of" mentioned in the present disclosure means two or more than two. "And/or" describes the relationship between associated objects, indicating that there may be three relationships. For example, A and/or B may mean: A exists alone, A and B exist simultaneously, and B exists alone. The character "/" generally indicates that the related objects are in an "or" relationship.

"Greater than or equal to" mentioned herein may mean greater than and equal to or greater than, and "less than or equal to" may mean less than and equal to or less than.

In addition, the step numbers described in the present disclosure only illustrate a possible execution sequence between the steps. In some other embodiments, the above steps may not be executed in the numbering sequence, for example, two steps with different numbers are executed simultaneously, or two steps with different numbers are executed in the reverse order as shown in the figure, which is not limited in the embodiments of the present application.

In addition, various embodiments provided in the present application can be combined arbitrarily to form new embodiments, which are all within the protection scope of the present application.

Those skilled in the art should realize that in one or more of the above examples, the functions described in the embodiments of the present application can be implemented using hardware, software, firmware, or any combination thereof. When implemented using software, the functions may be stored on or transmitted over as one or more instructions or code on a computer-readable medium. The computer-readable medium includes a computer storage medium and a communication medium including any medium that facilitates transfer of a computer program from one place to another. The storage medium can be any available medium that can be accessed by a general purpose or special purpose computer.

The above are only exemplary embodiments of the present application and are not intended to limit the present application. Any modifications, equivalent substitutions, improvements, etc. made within the spirit and principles of the present application shall be included in the protection scope of the present application.

## Claims

1. A method for reporting channel state information (CSI), performed by a terminal device, comprising:
determining a quantization parameter corresponding to a CSI encoding model, wherein the CSI encoding model is an artificial intelligence (AI)/machine learning (ML) model used to encode CSI, and the quantization parameter is used to quantify the encoded CSI obtained by the CSI encoding model.

2. The method according to claim 1, wherein the quantization parameter is comprised in parameter information of the CSI encoding model.

3. The method according to claim 1, wherein the quantization parameter is determined based on indication information sent by a network device.

4. The method according to claim 3, wherein the indication information is used to indicate one candidate value among a plurality of candidate values as the quantization parameter.

5. The method according to claim 4, wherein the indication information is comprised in CSI report configuration information sent by the network device.

6. The method according to claim 5, wherein in a case that the CSI report configuration information indicates using the CSI encoding model, the CSI report configuration information comprises the indication information.

7. The method according to claim 3, wherein the indication information comprises first information and second information; wherein the first information is used to configure a plurality of quantization parameters, and the second information is used to activate or indicate one quantization parameter among the plurality of quantization parameters.

8. The method according to claim 7, wherein the first information is a radio resource control (RRC) signaling, and the second information is a media access control control element (MAC CE) signaling.

9. The method according to any one of claims 1 to 8, wherein after determining the quantization parameter corresponding to the CSI encoding model, the method further comprises:
quantizing the encoded CSI using the quantization parameter to obtain CSI report information;
sending the CSI report information to a network device.

10. A method for reporting channel state information (CSI), performed by a network device, comprising:
sending indication information to a terminal device, wherein the indication information is used to indicate a quantization parameter corresponding to a CSI encoding model, the CSI encoding model is an artificial intelligence (AI)/machine learning (ML) model used to encode CSI, and the quantization parameter is used to quantize the encoded CSI obtained by the CSI encoding model.

11. The method according to claim 10, wherein the indication information is used to indicate one candidate value among a plurality of candidate values as the quantization parameter.

12. The method according to claim 11, wherein the indication information is comprised in CSI report configuration information sent by the network device.

13. The method according to claim 12, wherein in a case that the CSI report configuration information indicates using the CSI encoding model, the CSI report configuration information comprises the indication information.

14. The method according to claim 10, wherein the indication information comprises first information and second information; wherein the first information is used to configure a plurality of quantization parameters, and the second information is used to activate or indicate one quantization parameter among the plurality of quantization parameters.

15. The method according to claim 14, wherein the first information is a radio resource control (RRC) signaling, and the second information is a media access control control element (MAC CE) signaling.

16. The method according to any one of claims 10 to 15, further comprising:
receiving CSI report information sent by the terminal device, wherein the CSI report information is obtained by quantizing the encoded CSI using the quantization parameter;
according to a dequantization parameter corresponding to the quantization parameter, performing a dequantization on the CSI report information to obtain a dequantization result;
decoding the dequantization result using a CSI decoding model to obtain decoded CSI; wherein the CSI decoding model is an AI/ML model used to decode the CSI report information.

17. An apparatus for reporting channel state information (CSI), comprising:
a processing module, configured to determine a quantization parameter corresponding to a CSI encoding model, wherein the CSI encoding model is an artificial intelligence (AI)/machine learning (ML) model used to encode CSI, and the quantization parameter is used to quantize the encoded CSI obtained by the CSI encoding model.

18. An apparatus for reporting channel state information (CSI), comprising:
a sending module, configured to send indication information to a terminal device, wherein indication information is used to indicate a quantization parameter corresponding to a CSI encoding model, the CSI encoding model is an artificial intelligence (AI)/machine learning (ML) model used to encode CSI, and the quantization parameter is used to quantize the encoded CSI obtained by the CSI encoding model.

19. A terminal device, wherein the terminal device comprises a processor and a memory, a computer program is stored in the memory, and the processor executes the computer program to implement the method according to any one of claims 1 to 9.

20. A network device, wherein the network device comprises a processor and a memory, a computer program is stored in the memory, and the processor executes the computer program to implement the method according to any one of claims 10 to 16.

21. A communication system, wherein the system comprises a terminal device and a network device, the terminal device is configured to implement the method according to any one of claims 1 to 9, and the network device is configured to implement the method according to any one of claims 10 to 16.

22. A computer-readable storage medium, wherein a computer program is stored in the storage medium, and the computer program is configured to be performed by a processor to implement the method according to any one of claims 1 to 9, or the method according to any one of claims 10 to 16.

23. A chip, wherein the chip comprises a programmable logic circuit and/or program instructions, and when the chip is run, the chip is configured to implement the method according to any one of claims 1 to 9, or the method according to any one of claims 10 to 16.

24. A computer program product, wherein the computer program product comprises computer instructions, the computer instructions are stored in a computer-readable storage medium, and a processor reads and executes the computer instructions from the computer-readable storage medium, to implement the method according to any one of claims 1 to 9, or the method according to any one of claims 10 to 16.
